(19) Europäisches Patentamt
European Patent Office
Office européen des brevets

(11) **EP 1 106 916 B1**

(12) **EUROPÄISCHE PATENTSCHRIFT**

(45) Veröffentlichungstag und Bekanntmachung des Hinweises auf die Patenterteilung:
**23.08.2017 Patentblatt 2017/34**

(51) Int Cl.:
***F21V 13/04*** *(2006.01)*     *F21W 131/402* *(2006.01)*

(21) Anmeldenummer: **00126203.9**

(22) Anmeldetag: **30.11.2000**

(54) **Leuchte mit einer abschirmenden lichtbrechenden Struktur und einer strahlbegrenzenden Reflektoranordnung**

Luminaire comprising a shielding refracting structure and a light beam cutting reflector assembly

Luminaire comprenant des moyens réfractifs de protection et un réflecteur délimitant le faisceau lumineux

(84) Benannte Vertragsstaaten:
**AT BE CH CY DE DK ES FI FR GB GR IE IT LI LU MC NL PT SE TR**
Benannte Erstreckungsstaaten:
**SI**

(30) Priorität: **30.11.1999 DE 19957620**
           **10.02.2000 DE 10005761**

(43) Veröffentlichungstag der Anmeldung:
**13.06.2001 Patentblatt 2001/24**

(73) Patentinhaber: **Siteco Beleuchtungstechnik GmbH**
**83301 Traunreut (DE)**

(72) Erfinder: **Prodell, Peter**
**83308 Trostberg (DE)**

(74) Vertreter: **Schohe, Stefan**
**Boehmert & Boehmert**
**Anwaltspartnerschaft mbB**
**Pettenkoferstrasse 22**
**80336 München (DE)**

(56) Entgegenhaltungen:
**EP-A- 0 293 182    EP-A- 0 846 915**
**US-A- 3 123 308    US-A- 5 303 322**
**US-A- 5 530 628**

**Beschreibung**

Die Erfindung betrifft eine Leuchte gemäß dem Oberbegriff des Anspruchs 1, insbesondere solche Leuchten, bei denen Licht von einer Lichtquelle in einen Hohllichtleiter eingekoppelt und aus diesem über eine lichtbrechende Struktur an einer Lichtauskoppelseite ausgekoppelt wird.

Für Leuchten, die für Arbeitsplätze in Innenräumen, insbesondere Bildschirmarbeitsplätze, eingesetzt werden, fordern die geltenden Normen und Normvorschläge eine Abschirmung, d.h. eine Absenkung der mittleren Leuchtdichte der Lichtaustrittsfläche unter einen vorgegebenen Grenzwert, nach derzeitigen Normen bzw. Normentwürfen 200, 500 oder 1000 cd/m$^2$, oberhalb eines Grenzwinkels sowohl in einer Ebene parallel zu der Lampenachse als auch in einer Ebene senkrecht zu der Lampenachse. Konventionell wird eine solche Abschirmung durch ein Reflektorgehäuse und ein in der Lichtaustrittsöffnung des Reflektorgehäuses angebrachtes Lamellenraster erzeugt.

In der europäischen Patentanmeldung 99 310 141.1 wird vorgeschlagen, zur Erzeugung einer Abschirmung in zwei verschiedenen Ebenen auf der Lichtauskoppelseite eines Hohllichtleiters, in den Licht von einer Lichtquelle eingekoppelt wird, zwei Prismenplatten vorzusehen. Dabei sind auf jeder Platte lichtbrechende Strukturen, z.B. lineare Strukturen, angeordnet, die jeweils so ausgebildet sind, daß sie in bestimmten Vorzugsebenen eine gute Abschirmung erzeugen, während die Abschirmung in Ebenen senkrecht dazu praktisch nicht vorhanden ist. Die Strukturen der beiden Platten sind so zueinander ausgerichtet, daß sich ihre jeweilige Abschirmung ergänzt und dadurch insbesondere eine Abschirmung in zwei orthogonalen Ebenen senkrecht zu der Lichtaustrittsfläche erreicht wird.

Aus der EP 0 846 915 A1 ist weiterhin eine Leuchte bekannt, bei der nur eine einzige Prismenplatte verwendet wird, die Prismen mit einer Pyramidenstumpfform aufweist, wie sie beispielsweise aus WO 95/12782 oder WO 96/23166 für Hintergrundbeleuchtungen für LCD-Anzeigen oder dgl. bekannt sind. Es hat sich herausgestellt, daß die in den beiden letztgenannten Druckschriften beschriebenen Prismenstrukturen in vorteilhafter Weise verwendet werden können, um bei einer Leuchte zur Beleuchtung von Innenräumen eine Abschirmung in verschiedenen Ebenen zu erzeugen. Diese pyramidenstumpfförmigen Prismen haben sich zwar hinsichtlich ihrer Abschirmungseigenschaften bewährt. Ihre Herstellung ist jedoch aufwendig. Nachteilig ist weiterhin, daß aufgrund der Pyramidenstumpfform nur ein verhältnismäßig kleiner Anteil der Lichtauskoppelfläche des Hohllichtleiters tatsächlich zur Lichtauskopplung in die Prismen zur Verfügung steht, was zu einem relativ geringen Wirkungsgrad der Lichtauskopplung führt.

EP 0 293 182 A2 beschreibt eine Lichtquelle für einen Overheadprojektor, bei der an einer Lichtauskoppelseite eines Lichtleiters eine Prismenplatte angeordnet ist und bei der die dieser Prismenplatte gegenüberliegende reflektierende Wand mit einer Prismenstruktur versehen ist. Aufgabe der reflektierenden Wand bzw. der Prismenplatte ist es, das Licht möglichst gleichmäßig zu verteilen und helle Flecken an der Lichtaustrittsfläche zu vermeiden. Die lichtbrechende Prismenstruktur an der Lichtauskoppelseite ist so ausgebildet, daß Licht mit nahezu senkrechtem Einfall durch Totalreflexion zurückreflektiert wird. Diese Prismen erzeugen keine Abschirmung. Vielmehr wird das durch sie hindurchtretende Licht zum einen in einen zentralen Winkelbereich mit relativ kleinen Austrittswinkeln zur Senkrechten abgegeben, zum anderen aber auch in zwei Randbereiche bei großen Winkeln zur Senkrechten.

US-PS 3 123 308 offenbart eine Leuchte für die Beleuchtung ausgedehnter Flächen, insbesondere zur Ausleuchtung einer Straße, bei welcher in einem parabolischen Reflektor im wesentlichen entlang der Brennlinie des Reflektors eine Leuchtstofflampe angeordnet ist. Der Reflektor ist durch eine lichtdurchlässige Platte mit einer lichtbrechenden Struktur aus linienförmigen Prismen verschlossen, wobei die Längsrichtung dieser Prismen senkrecht zu der Längsachse der Lampe verläuft.

Es ist die Aufgabe der Erfindung, eine Leuchte der eingangs beschriebenen Art zur Verfügung zu stellen, welche eine verbesserte Abschirmung bei einem einfachen Aufbau aufweist.

Erfindungsgemäß wird diese Aufgabe gelöst durch eine Leuchte gemäß Anspruch 1 oder 2. Eine solche Leuchte besitzt eine Lichtaustrittsfläche und eine vorzugsweise gegenüber der Lichtaustrittsfläche seitlich versetzte Lichtquelle, wobei in einem Strahlengang von der Lichtquelle zu der Lichtaustrittsfläche ein lichtdurchlässiges Element mit einer lichtbrechenden Struktur an einer Grenzfläche zwischen zwei Medien mit zwei unterschiedlichen Brechungsindizes sowie eine Reflektoranordnung angeordnet sind, wobei die lichtbrechende Struktur eine Abschirmung des über die Lichtaustrittsfläche abgestrahlten Lichts in mindestens einer Ebene senkrecht zu der Lichtaustrittsfläche derart erzeugt, daß oberhalb eines Grenzwinkels zu einer Senkrechten zu der Lichtaustrittsfläche in dieser Ebene die mittlere Leuchtdichte der Lichtaustrittsfläche unter einen vorgegebenen Grenzwert abfällt. Die Reflektoranordnung begrenzt den Bereich der Reflexionswinkel, mit denen von ihr zu der Lichtaustrittsfläche laufendes Licht in diesem Strahlengang reflektiert wird, derart, daß zumindest in einer Ebene senkrecht zu der Lichtaustrittsfläche eine Abschirmung erzeugt wird, wobei die lichtbrechende Struktur in dieser Ebene keine Abschirmung oder eine schwächere Abschirmung als die von der Reflektoranordnung erzeugte Abschirmung erzeugt.

Die reflektierende Fläche bzw. die reflektierenden Flächen der Reflektoranordnung sind hinsichtlich ihrer Orientierung zu dem auf sie einfallenden Strahl in dem besagten Strahlengang und der sich daraus ergebenden Reflexionswinkel so eingerichtet, daß der Winkelbereich, in dem das die Reflektoranordnung verlassende Licht in diesem Strahlengang läuft, derart begrenzt ist, daß eine Abschirmung in dem vorangehend genannten Sinne erzeugt wird.

Vorzugsweise sind in dem besagten Strahlengang als optisch wirksame Elemente lediglich die lichtbrechende Struktur und die besagte Reflektoranordnung enthalten.

Vorzugsweise läuft alles Licht, das von der Lampe zu der Lichtaustrittsfläche läuft, durch die lichtbrechende Struktur und/oder über die Reflektoranordnung.

Die Abschirmwirkung durch die erfindungsgemäße Reflektoranordnung wird dadurch bewirkt, daß in dem besagten Strahlengang die Reflektoranordnung den Lichteinfall im wesentlichen auf Einfallswinkel auf die lichtbrechende Struktur unterhalb eines Maximalwertes begrenzt, wenn die Reflektoranordnung der bzw. den lichtbrechenden Strukturen vorgeschaltet ist, bzw. daß die Reflektoranordnung den Einfallswinkel auf die Lichtaustrittsfläche, der in der in der Regel dann gleich dem Abstrahlwinkel ist, begrenzt, wenn die Reflektoranordnung der bzw. den lichtbrechenden Strukturen nachgeschaltet ist. Idealerweise ist der Einfallswinkel streng auf Werte unterhalb eines Maximalwerts begrenzt, während in der Praxis Lichtanteile, die für die Abschirmung nicht wesentlich sind, Einfallswinkel oberhalb dieses Grenzwertes aufweisen können. Dies soll auch von dem Begriff der Begrenzung des Einfallswinkels miterfaßt sein.

Unter einer "schwächeren Abschirmung" wird eine Abschirmung verstanden, bei welcher der Abschirmwinkel, d.h. der Winkel, bei dem die Leuchtdichte unter den vorgegebenen Grenzwert abfällt, größer ist. Die Reflektoranordnung kann in dem Strahlengang von der Lichtquelle zu der Lichtaustrittsfläche der lichtbrechenden Struktur vor- oder nachgeschaltet sein.

Der Abschirmwinkel, der mit Hilfe der Reflektoranordnung erzeugt wird, kann vorzugsweise in dem Bereich von 45° bis 70°, bevorzugt von 50° bis 65°, besonders bevorzugt von 60° bis 65° liegen. Der Grenzwert der Leuchtdichte kann z.B. entsprechend den genannten Normen bzw. Normvorschlägen bei 200 cd/m$^2$, 500 cd/m$^2$ oder 1000 cd/m$^2$ liegen.

Das von der Lichtquelle abgegebene Licht wird zumindest überwiegend, vorzugsweise vollständig indirekt auf die Lichtaustrittsfläche eingestrahlt. Es kann dabei z.B. durch einen Reflektor umgelenkt werden. Vorzugsweise ist die Lichtquelle gegenüber der Lichtaustrittsfläche z.B. durch eine Reflektorwand oder dgl. abgeschirmt, so daß ein direkter Lichteinfall auf die Lichtaustrittsfläche vermieden wird.

Erfindungsgemäß ergänzt und verstärkt die Reflektoranordnung die Abschirmung durch die lichtbrechende Struktur. Insgesamt ergibt sich also eine Abschirmung, die zumindest in einer Ebene stärker ist, als wenn das Licht ohne weitere strahlbegrenzende Maßnahmen von der Lichtquelle zu der lichtbrechenden Struktur und von der lichtbrechenden Struktur zu der Lichtaustrittsfläche laufen würde. Dies würde z.B. dem Fall entsprechen, daß die erfindungsgemäße Reflektoranordnung durch reine Umlenkspiegel ersetzt wird, welche keine strahlbegrenzende Funktion haben.

Gemäß einer Ausführungsform der Erfindung ist das Element mit der lichtbrechenden Struktur Bestandteil eines Hohllichtleiters, in den von mindestens einer Lichteinkoppelseite aus Licht von einer Lichtquelle eingekoppelt wird und aus dem an mindestens einer Lichtauskoppelseite Licht über die lichtbrechende Struktur ausgekoppelt wird, so daß das ausgekoppelte Licht über die Lichtaustrittsfläche der Leuchte, abgestrahlt wird, die Reflektoranordnung dem Hohllichtleiter, genauer der besagten Lichtauskoppelfläche, optisch nachgeschaltet ist, d.h. in dem Lichtweg zu der Lichtaustrittsfläche nach dem Hohllichtleiter Liegt. Vorzugsweise bildet sie jedoch einen Bestandteil des Hohllichtleiters und ist der lichtbrechenden Struktur optisch vorgeschaltet.

Bei einer Ausführungsform mit einem Hohllichtleiter kann die Licht austritts fläche der Leuchte mit der Lichtauskoppelseite des Hohllichtleiters identisch sein.

Die Erfindung kann vorsehen, daß eine Reflektoranordnung, welche Licht von der Lichtquelle zu der lichtbrechenden Struktur lenkt, in einer Fläche, insbesondere einer Ebene, senkrecht zu der Lichtauskoppelseite des Hohllichtleiters den Einfallswinkel auf die lichtbrechende Struktur im wesentlichen auf Werte unterhalb eines Grenzwinkels bezüglich einer Senkrechten zu der lichtbrechenden Struktur begrenzt.

Bedingt durch Materialfehler und die Eigenschaften des Materials ist in der Regel eine scharfe Begrenzung des Einfallswinkels nicht möglich. Eine Begrenzung erfolgt immer in einem Winkel $\gamma \pm \Delta\gamma$, wobei $\Delta\gamma$ die Toleranzen des Grenzwinkels angibt. Durch Streueffekte in dem Element mit der lichtbrechenden Struktur ist der Abschirmwinkel in der Regel größer, als dies dem Einfallswinkel entspricht. Dementsprechend wird der maximale Einfallswinkel in der Regel kleiner als theoretisch erforderlich eingestellt.

Es kann insbesondere vorgesehen sein, daß die lichtbrechende Struktur eine Abschirmung in mehreren Ebenen erzeugt und die Reflektoranordnung die Abschirmung in mindestens einer Ebene verstärkt, in welcher die lichtbrechende Struktur keine Abschirmung oder eine geringere Abschirmung als in der Ebene mit der maximalen Abschirmung erzeugt.

Gemäß einer Ausführungsform der Erfindung wird die lichtbrechende Struktur durch ein oder mehrere längliche lichtbrechende Elemente gebildet, die entsprechend einem flächenfüllenden Muster aus einer oder mehreren kreuzungsfreien Linien angeordnet sind, wobei die lichtbrechenden Elemente zumindest in einer Fläche, insbesondere einer Ebene, senkrecht zu den Linien eine Abschirmung des aus der lichtbrechenden Struktur austretenden Lichts erzeugen und in der Richtung parallel zu den Linien dieses Musters keine oder nur eine geringere Abschirmung des aus der lichtbrechenden Struktur austretenden Lichts erzeugen, und die Fläche, in welcher die Reflektoranordnung eine Abschirmung erzeugt und z.B. gemäß einer Ausführungsform den Einfallswinkel auf die lichtbrechende Struktur begrenzt, abschnittsweise parallel zu der oder den Linien liegt.

Gemäß einer besonderen Ausführungsform sind die lichtbrechenden Elemente entsprechend einem Muster von parallelen geraden Linien angeordnet. Die Linien müssen jedoch nicht notwendigerweise gerade sein. Beispielsweise ist auch ein kreisförmiges Linienmuster denkbar, d.h. die lichtbrechende Struktur besteht aus konzentrischen kreisförmigen Elementen, z.B. kreisförmigen Prismenelementen. Ebenso sind auch flächenfüllende Muster mit nur einer Linie, beispielsweise in Form einer Spirale, denkbar.

Die lichtbrechenden Elemente können insbesondere Prismen oder prismenähnliche Elemente sein, welche vorzugsweise, aber nicht notwendigerweise einen dreieckigen Querschnitt haben, der in der Längsrichtung der Elemente konstant ist. Die Elemente der lichtbrechenden Struktur müssen nicht notwendigerweise ein spitzes Ende aufweisen. Es kommen auch Prismen mit einem abgeflachten Ende, beispielsweise mit einem trapezförmigen Querschnitt, und/oder gekrümmten oder mehrflächigen Seitenwänden, z.B. mit einem Querschnitt in der Form eines Polygonzuges, in Betracht. Es kann auch vorgesehen sein, daß die lichtbrechende Struktur pyramidenstumpfförmige Prismen, wie sie eingangs erwähnt wurden, oder linsenförmige Elemente aufweist.

Licht, das auf eine Lichtaustrittsfläche der lichtbrechenden Struktur mit einem Einfallswinkel größer als dem Winkel der Totalreflexion einfällt, wird in das lichtbrechende Element zurückreflektiert. Dementsprechend ist der Austrittswinkel, bezogen auf die Grenzflächen der lichtbrechenden Struktur, begrenzt. Diese Grenzflächen liegen jedoch in der Regel schräg zu der Lichtaustrittsfläche, so daß die besagte Begrenzung des Austrittswinkels nicht notwendig eine Abschirmung bedeutet. Ein Kriterium für eine Abschirmung läßt sich dadurch ableiten, daß gefordert wird, daß für Strahlengänge bis zu einer vorgegebenen Höchstzahl k (z.B. k = 1, 2, 3 oder 4) von inneren Reflexionen in den lichtbrechenden Elementen vor einem Lichtaustritt aus der Struktur der Austrittswinkel bezüglich einer Senkrechten zu der Grundfläche der lichtbrechenden Struktur maximal gleich dem Abschirmwinkel ist. Es hat sich gezeigt, daß für Prismen mit einem Querschnitt in der Form eines gleichschenkligen Dreiecks eine gute Abschirmung erreicht werden kann, wenn zwischen dem Abschirmwinkel C und dem Prismenwinkel w für eine Grenzfläche zu Luft die folgenden Relationen bestehen:

$$w/2 \leq C \qquad\qquad\qquad (1)$$

$$w \geq 2 \, (2 \arcsin(1/n) + 90)/3 \qquad\qquad (2)$$

$$\tan(w/2) \leq (n \sin(\arcsin(1/n) - 3 \, w/2) + \cos(w/2)) / (n \cos(\arcsin(1/n) - 3 \, w/2) + \sin(w/2)), \qquad (3)$$

Diese Relationen sind lediglich beispielhaft. Grundsätzlich sind auch andere Relationen denkbar und möglich.

Das besagte Element mit der lichtbrechenden Struktur kann ausschließlich als Träger der lichtbrechenden Elemente der besagten lichtbrechenden Struktur ausgebildet sein. Gemäß einer Ausführungsform ist es eine Platte, die an der Lichtaustrittsseite des Hohllichtleiters, typischerweise gegenüber einem Dachreflektor, der einen Teil einer erfindungsgemäßen Reflektoranordnung bildet, angeordnet ist und auf einer oder beiden Seiten mit einer lichtbrechenden Struktur wie vorangehend erwähnt ausgebildet ist. Ein Element mit einer lichtbrechenden Struktur im Sinne dieser Erfindung kann jedoch auch ein Abschnitt eines größeren Bauteils, beispielsweise eines Gehäuses eines Hohllichtleiters sein. Denkbar wären z.B. Ausführungsformen, bei denen eine Grundfläche und die Seitenflächen eines Hohllichtleiters einstückig ausgebildet sind und die lichtbrechende Struktur in der Grundfläche ausgebildet ist. Das Element mit der lichtbrechenden Struktur kann aus einem gängigen klaren Material, z.B. Polymethylmethacrylat, Polyester oder Polycarbonat, bestehen.

Die Reflektoranordnung kann aus mehreren Reflektoren oder aus einem einzigen Reflektor mit mehreren Reflektorabschnitten mit unterschiedlichen Reflexionseigenschaften bestehen. Es können auch mehrere Reflektoren mit solchen Reflektorabschnitten vorgesehen sein. Grundsätzlich kann die Reflektoranordnung auch aus einem einzigen Reflektor mit homogenen Reflexionseigenschaften, z.B. einem Reflektor mit konstanter Krümmung, bestehen.

Zur Strahlbegrenzung weist die Reflektoranordnung einen Reflektor oder Reflektorabschnitt auf, welcher das auf ihn einfallende Licht zu der lichtbrechenden Struktur reflektiert. Die Reflektoranordnung hat in der Regel eine den Strahl verengende oder aufweitende Funktion.

Es kann vorgesehen sein, daß die Reflektoranordnung einen fokussierenden oder defokussierenden Reflektor oder Reflektorabschnitt aufweist, der gemäß einer Ausführungsform der Erfindung gegenüber der lichtbrechenden Struktur in dem Hohllichtleiter angeordnet ist.

Die erfindungsgemäße Leuchte kann eine Strahlbegrenzungseinrichtung aufweisen, welche bewirkt, daß das Licht der Lichtquelle nur durch Reflexion an einem Reflektor oder an einem Reflektorabschnitt der Reflektoranordnung von der Lichtquelle zu der lichtbrechenden Struktur geleitet wird.

Diese Strahlbegrenzung kann beispielsweise eine Blende oder eine Blendenanordnung sein, welche auf der Lichteinkoppelseite des Hohllichtleiters angeordnet ist und einen direkten Lichteinfall auf die lichtbrechende Struktur verhindert. Dabei kann die Blende zweckmäßigerweise das Licht von der Lichtquelle zu einem Reflektor leiten, welcher der lichtbrechenden Struktur gegenübersteht.

Die Strahlbegrenzungseinrichtung kann allerdings gemäß einer abgewandelten Ausführungsform auch einen teilweisen direkten Lichteinfall auf die lichtbrechende Struktur zulassen, sofern die geforderte maximale Leuchtdichte an der Lichtaustrittsfläche oberhalb des Abschirmwinkels dadurch nicht überschritten wird.

Es kann vorgesehen sein, daß die Reflektoranordnung einen ersten Reflektor oder Reflektorabschnitt umfaßt, welcher die Lichtquelle zumindest teilweise umgibt und das auf ihn einfallende Licht der Lichtquelle zu einem zweiten Reflektor oder Reflektorabschnitt lenkt, welcher das auf ihn von der Lichtquelle direkt einfallende Licht sowie das zu ihm von dem ersten Reflektor oder Reflektorabschnitt reflektierte Licht zu der lichtbrechenden Struktur reflektiert.

Der zweite Reflektor ist vorzugsweise ein der lichtbrechenden Struktur gegenüberstehender Dachreflektor.

Gemäß einer Ausführungsform verhindert der erste Reflektor ganz oder teilweise einen direkten Lichteinfall von der Lichtquelle auf die lichtbrechende Struktur.

Gemäß einer bevorzugten Ausführungsform ist der zweite Reflektor oder Reflektorabschnitt fokussierend oder defokussierend ausgebildet und der erste Reflektor oder Reflektorabschnitt hat im wesentlichen die Funktion, das Licht von der Lichtquelle im wesentlichen vollständig zu dem zweiten Reflektor bzw. Reflektorabschnitt zu reflektieren. Es kann jedoch auch vorgesehen sein, daß die Begrenzung des Einfallswinkels auf die lichtbrechende Struktur im wesentlichen durch die Eigenschaften des ersten Reflektors oder Reflektorabschnitts erfolgt und der zweite Reflektor oder Reflektorabschnitt im wesentlichen nur der Umlenkung des Lichts zu der lichtbrechenden Struktur dient. Im Regelfall werden sowohl der erste Reflektor als auch der zweite Reflektor zu der Begrenzung des Einfallswinkels bei der lichtbrechenden Struktur z.B. in dem Sinne beitragen, daß der erste Reflektor das zu dem zweiten Reflektor reflektierte Licht auf einen Bereich von Einfallswinkeln bei dem zweiten Reflektor begrenzt, für den der zweite Reflektor seinerseits eine bestimmte Begrenzung des Einfallswinkels auf die lichtbrechende Struktur bewirkt.

Die Erfindung kann auch vorsehen, daß die Reflektoranordnung einen Reflektor oder Reflektorabschnitt umfaßt, der aus einer Struktur von Reflektorelementen aufgebaut ist, die jeweils einen Flächenabschnitt, der Licht in dem direkten Strahlengang von der Lichtquelle zu der Lichtaustrittsfläche über die Reflektoranordnung und die lichtbrechende Struktur Licht reflektiert, und einen Flächenabschnitt aufweisen, der in diesem Strahlengang kein Licht reflektiert.

Dabei ist ein Strahlengang ohne Reflexionen an anderen Reflektoren, z.B. den Seitenwänden des Hohllichtleiters, und ohne Streuung gemeint, d.h. das Licht läuft nur in einer Richtung zwischen den vorangehend genannten Elementen (Lichtquelle, Reflektoranordnung, lichtbrechende Struktur und Lichtaustrittsfläche). Bezogen auf das Beispiel einer Leuchte mit einem Hohllichtleiter bedeutet dies z.B., daß Licht, das von den Seitenwänden des Hohllichtleiters, soweit diese nicht zur Begrenzung des Einfallswinkels auf die lichtbrechende Struktur beitragen und somit Teil der erfindungsgemäßen Reflektoranordnung sind, oder von der Platte mit der lichtbrechenden Struktur zu dem Dachreflektor zurückreflektiert werden, nicht einem Strahlengang in diesem Sinne folgt.

Eine solche Strukturierung des Reflektors kann sowohl vorgesehen sein, wenn nur ein einziger Reflektor vorhanden ist, beispielsweise ein der lichtbrechenden Struktur gegenüberstehender Reflektor, welcher das auf ihn von der Lichtquelle einfallende Licht zu der lichtbrechenden Struktur reflektiert, als auch bei einer Reflektoranordnung mit mehreren Reflektoren. Im letzteren Fall ist die Struktur von Reflektorelementen ebenfalls vorzugsweise in einem Reflektor ausgebildet, welcher der lichtbrechenden Struktur gegenübersteht, beispielsweise dem vorangehend erwähnten zweiten Reflektor bzw. Reflektorabschnitt. Sie kann jedoch auch in einem anderen Reflektor bzw. Reflektorabschnitt ausgebildet sein.

Der Vorteil einer solchen Strukturierung liegt darin, daß sich strahlverengende bzw. strahlaufweitende Eigenschaften oder auch eine einfache Lichtumlenkung mit einer geringeren Bauhöhe erreichen lassen als z.B. mit einer glatten gekrümmten bzw. ebenen Reflektorfläche.

Es kann vorgesehen sein, daß die Reflektorelemente der Struktur entsprechend einer konkaven oder konvexen Einhüllenden angeordnet sind.

Die Reflektorelemente der besagten Struktur können auch entlang einer zu der lichtbrechenden Struktur oder der Lichtaustrittsfläche geneigten, vorzugsweise geraden Fläche angeordnet sein. Hierbei kann der Hohllichtleiter insbesondere eine Keilform annehmen.

Die Reflektorelemente können z.B. zackenförmig oder gewölbt sein.

Bei einer zackenförmigen Ausgestaltung kann vorgesehen sein, daß die Zacken der einzelnen Reflektorelemente zumindest teilweise eine unterschiedliche Länge und/oder Neigung bezüglich der lichtbrechenden Struktur aufweisen, wobei sich vorzugsweise die Länge und/oder die Neigung mit zunehmender Entfernung von der Lichtquelle kontinuierlich von einem Reflektorelement zum nächsten verändert.

Die Erfindung kann eine Reflektoranordnung vorsehen die der lichtbrechenden Struktur bzw., im Falle von mehreren lichtbrechenden Strukturen, den lichtbrechenden Strukturen optisch nachgeschaltet ist und so ausgebildet ist, daß in einer Ebene senkrecht zu der Lichtaustrittsfläche der Einfallswinkel auf die Lichtaustrittsfläche bezüglich einer Senkrechten zu der Lichtaustrittsfläche im wesentlichen auf Werte unterhalb eines Grenzwinkels beschränkt wird, wobei in dieser Ebene die lichtbrechende Struktur bzw. die lichtbrechenden Strukturen keine oder nur eine geringere Abschirmung erzeugen. Grundsätzlich ist es möglich, eine erfindungsgemäße Reflektoranordnung einer lichtbrechenden Struktur vorzuschalten und eine weitere erfindungsgemäße Reflektoranordnung einer lichtbrechenden Struktur nachzuschalten oder auch zwischen zwei lichtbrechenden Strukturen eine erfindungsgemäße Reflektoranordnung vorzusehen.

Die erfindungsgemäße Leuchte kann mehrere Lichtquellen aufweisen, die an verschiedenen Seiten des Hohllichtleiters angeordnet sind. Insbesondere können zwei an einander gegenüberliegenden Seiten des Hohllichtleiters angeordnete Lichtquellen vorgesehen sein, denen jeweils eine identische Reflektoranordnung zugeordnet ist. Dabei kann insbesondere vorgesehen sein, daß ein der lichtbrechenden Struktur gegenüberstehender Reflektor der jeweiligen Reflektoranordnung bis auf die lichtbrechende Struktur heruntergezogen ist. Dabei können sich effektiv zwei oder mehr Hohlräume des Hohllichtleiters ergeben. Es kann auch vorgesehen sein, daß für beide Lichtquellen eine Reflektoranordnung vorgesehen ist, die zwei getrennte Reflektoren aufweist, die jeweils für eine der Lichtquellen die besagte Abschirmung, z.B. durch die Begrenzung des Einfallswinkels auf die lichtbrechende Struktur, bewirken. Bei einer Leuchte mit Hohllichtleiter kann auch vorgesehen sein, daß der Abstand eines der lichtbrechenden Struktur gegenüberstehenden Reflektors oder Reflektorabschnitts von der lichtbrechenden Struktur in der Richtung von einer Lichtquelle zu der gegenüberliegenden Lichtquelle zunächst abnimmt, so daß ein erster Abschnitt gebildet wird, welcher die Begrenzung des Einfallswinkels für Licht von der ersten Lichtquelle bewirkt, und dann, ggf. nach einem Zwischenabschnitt, beispielsweise mit konstantem Abstand zu der lichtbrechenden Struktur, zu der zweiten Lichtquelle hin wieder zunimmt, so daß ein zweiter Abschnitt gebildet wird, welcher die Begrenzung des Einfallswinkels auf die lichtbrechende Struktur für das Licht von der zweiten Lichtquelle bewirkt. Eine ähnliche Reflektorgeometrie kann auch vorgesehen sein, wenn die Reflektoranordnung der lichtbrechenden Struktur optisch nachgeschaltet ist, wobei hier sinngemäß der Einfallswinkel auf die lichtbrechende Struktur durch den Einfallswinkel auf die (ggf. imaginäre) Lichtaustrittsfläche zu ersetzen ist.

Weitere Merkmale und Vorteile der Erfindung ergeben sich aus der nachfolgenden Beschreibung von Ausführungsbeispielen der Erfindung anhand der beigefügten Zeichnungen.

Fig. 1 zeigt schematisch einen Schnitt einer ersten Ausführungsform einer erfindungsgemäßen Leuchte,
Fig. 2 zeigt beispielhaft eine Prismenplatte, wie sie bei einer erfindungsgemäßen Leuchte verwendet werden kann,
Fig. 3 zeigt eine zweilampige Ausführungsform einer erfindungsgemäßen Leuchte,
Fig. 4 zeigt schematisch eine dritte Ausführungsform einer erfindungsgemäßen Leuchte,
Fig. 5 zeigt schematisch eine vierte Ausführungsform einer erfindungsgemäßen Leuchte,
Fig. 6 zeigt schematisch eine fünfte Ausführungsform einer erfmdungsgemäßen Leuchte,
Fig. 7 zeigt schematisch eine sechste Ausführungsform einer erfindungsgemäßen Leuchte,
Fig. 8 zeigt schematisch eine siebte Ausführungsform einer erfindungsgemäßen Leuchte,
Fig. 9 zeigt schematisch eine achte Ausführungsform einer erfindungsgemäßen Leuchte,
Fig. 10 zeigt eine erfindungsgemäße Leuchte mit einem nachgeschalteten Reflektor,
Fig. 11 zeigt eine zweite Ausführungsform einer erfindungsgemäßen Leuchte mit nachgeschaltetem Reflektor.

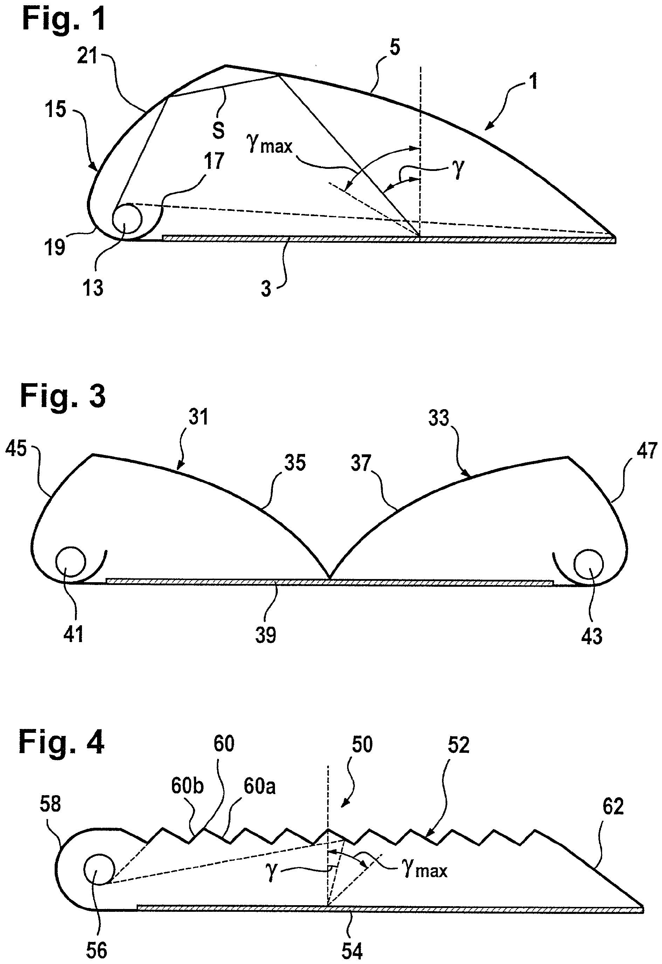

Fig. 1 zeigt schematisch den Aufbau eines ersten Ausführungsbeispiels einer erfindungsgemäßen Leuchte. Ein allgemein mit 1 bezeichneter Hohllichtleiter wird durch eine Prismenplatte 3, einen Dachreflektor 5 sowie reflektierende vordere und hintere Seitenwände (nicht dargestellt) gebildet. Der Dachreflektor 5 bildet auf einer Seite eine Lichteintrittsöffnung des Hohllichtleiters 1 und schließt auf der gegenüberliegenden Seite in einem spitzen Winkel an die Prismenplatte 3 an, so daß sich die Höhe des Hohllichtleiters von der Lichteintrittsöffnung zu der gegenüberliegenden Seite hin verringert. Der Reflektor 5 ist spiegelnd ausgebildet, während die nicht dargestellten reflektierenden Seitenwände diffus reflektierend oder spiegelnd reflektierend ausgebildet sein können.

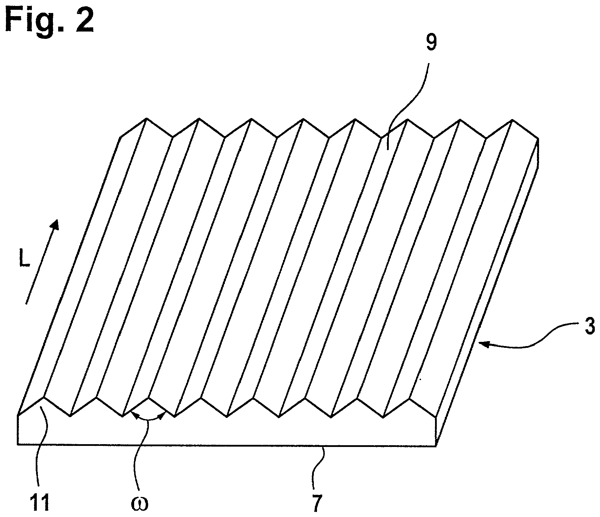

In Fig. 2 ist eine Prismenplatte 3, wie sie bei der Erfindung verwendet werden kann, schematisch dargestellt. Die Prismenplatte 3 besteht aus einem klaren durchsichtigen Material, wie Polymethylmethacrylat, Polyester, Polystyrol oder Polycarbonat, und besitzt eine glatte Seite 7 und eine strukturierte Seite 9. In der strukturierten Seite 9 ist eine Struktur aus geraden länglichen Prismen 11 ausgebildet, die über ihre gesamte Länge einen konstanten Querschnitt senkrecht zu ihrer Längsachse in der Form eines gleichschenkligen Dreiecks mit einem Prismenwinkel w aufweisen. Die Prismen 11 sind parallel angeordnet und erzeugen, wenn Licht auf die glatte Seite 7 eingestrahlt wird, in der Ebene senkrecht zu ihrer Längsrichtung L eine Abschirmung des aus ihnen austretenden Lichts, wenn die vorangehend genannten Bedingungen (1) bis (3) eingehalten sind.

Der Lichteintrittsöffnung des Hohllichtleiters 1 benachbart ist eine Lampe 13 angeordnet, welche über die Lichteintrittsöffnung Licht auf den Dachreflektor 5 einstrahlt. Die Lampe 13 ist von einem Einkoppelreflektor 15 umgeben, welcher das auf ihn einfallende Licht zu dem Dachreflektor 5 reflektiert. Der innere Rand 17 des Einkoppelreflektors 15 ist so ausgebildet, daß Licht von der Lampe 13 nicht direkt auf die Prismenplatte 3 einfallen kann, was durch die gestrichelte Linie in Fig. 1 angedeutet ist, sondern im wesentlichen vollständig auf den Dachreflektor 5 einfällt. Um möglichst alles auf ihn einfallende Licht der Lampe zu dem Dachreflektor 5 zu reflektieren, weist der Einkoppelreflektor 15 einen stärker gekrümmten Abschnitt 19 und einen flacher gekrümmten Abschnitt 21 auf. Zusätzlich oder alternativ kann der Reflektor 15, was in Fig. 1 nicht dargestellt ist, in der Form einer Evolvente ausgebildet sein. Die Evolventenform verhindert, daß der Reflektor 15 Licht zu der Lampe 13 zurückreflektiert. Die Prismenplatte 3 koppelt das Licht aus dem Hohllichtleiter aus und bildet gleichzeitig die Lichtaustrittsfläche der Leuchte.

Bei der Leuchte gemäß Fig. 1 verläuft die Längsrichtung. L der Prismen 11 senkrecht zu der Achse der Lampe 13. Dementsprechend erzeugen die Prismen 11 vor allem eine Abschirmung in Ebenen parallel oder ungefähr parallel zu der Lampenachse, während sie in Ebenen senkrecht zu der Lampenachse keine Abschirmung erzeugen. In diesen Ebenen wirkt die Prismenplatte im wesentlichen wie eine planparallele Platte. Um auch in diesen Ebenen eine Abschirmung zu erzeugen, sind die Reflektoren 5 und 15 so ausgebildet, daß der Einfallswinkel $\gamma$ des auf die Prismenplatte 3 auftreffenden Lichts kleiner als ein maximaler Winkel $\gamma_{max}$ ist (vgl. Strahl S). Da die Prismenplatte 3 in der Ebene senkrecht zu der Lampenachse im wesentlichen wie eine planparallele Platte wirkt, ist der Austrittswinkel des Lichts aus der Prismenplatte 3 und damit an der Lichtaustrittsfläche im wesentlichen gleich dem Einfallswinkel, so daß durch die Reflektoranordnung Licht oberhalb des Winkels $\gamma_{max}$ abgeschirmt wird.

Dieses Funktionsprinzip gilt in gleicher Weise für die nachfolgenden Ausführungsbeispiele und wird daher nachfolgend nicht mehr im einzelnen beschrieben. Insbesondere kann bei den nachfolgenden Ausführungsbeispielen die Prismenplatte wie in Fig. 2 gezeigt ausgebildet und ihre Längsachse L senkrecht zu der zugehörigen Lampenachse ausgerichtet sein, während die Reflektoranordnung, ungeachtet ihrer konkreten Ausgestaltung, eine Begrenzung des Einfallswinkels durch eine obere Schwelle $\gamma_{max}$ in einer Ebene parallel zu der Richtung L bewirkt. Selbstverständlich können auch andere Ausgestaltungen der Prismenplatte verwendet werden und die Prismenplatte kann auch anders bezüglich der Lampenachse, z.B. mit der Längsrichtung L parallel zu der Lampenachse, oder bezüglich der Reflektoranordnung ausgerichtet sein.

Fig. 3 zeigt eine zweilampige Ausführungsform einer erfindungsgemäßen Leuchte, die im wesentlichen eine symmetrische Duplizierung der Leuchte gemäß Fig. 1 ist. Bei dieser Leuchte sind zwei Hohllichtleiter 31 und 33 vorhanden, die jeweils einen Dachreflektor 35 und 37 aufweisen. Auf der den Dachreflektoren 35 und 37 gegenüberliegenden Seite werden die Hohllichtleiter 31 und 33 durch eine Prismenplatte 39 abgeschlossen, die beiden Hohllichtleitern gemeinsam ist. Selbstverständlich können auch zwei getrennte Prismenplatten verwendet werden oder die Prismenstruktur kann im Bereich der Grenze zwischen den Reflektoren 35 und 37 unterbrochen sein. Die Prismenplatte 39 entspricht der Prismenplatte 3 gemäß Fig. 1 und kann insbesondere wie in Fig. 2 gezeigt ausgebildet sein. Den beiden Hohllichtleitern 31 und 33 sind jeweils Lampen 41 und 43 zugeordnet, welche teilweise direkt und teilweise über Einkoppelreflektoren 45 und 47 Licht in die Hohllichtleiter 31 und 33 einkoppeln. Die Längsrichtung der Prismen der Platte 39 liegt senkrecht zu der Achse der Lampen 41 und 43. Die Reflektoren 35 und 45 bzw. 37 und 47 sind entsprechend den Reflektoren 5 und 15 des ersten Ausführungsbeispiels ausgebildet. Die Wirkungsweise der Reflektoren und der Prismenplatte entspricht derjenigen bei dem Ausführungsbeispiel der Fig. 1 und wird daher nicht noch einmal erläutert.

Fig. 4 zeigt eine erfindungsgemäße Leuchte, die, wie die vorangehend beschriebenen Leuchten, einen Hohllichtleiter 50 mit einem Dachreflektor 52 und einer Prismenplatte 54 aufweist, in den Licht von einer Lampe 56 eingekoppelt wird. Der Lampe 56 ist ein Einkoppelreflektor 58 zugeordnet, welcher das in die von dem Hohllichtleiter abgewandte Richtung abgestrahlte Licht der Lampe 56 zu dem Hohllichtleiter 50 zurückreflektiert. Die Prismenplatte 54 ist wie vorangehend mit Bezug auf Fig. 1 und 2 beschrieben ausgebildet und ausgerichtet, d.h. die Längsachse L der Prismen liegt im wesentlichen senkrecht zu der Lampenachse und die Prismen erzeugen eine Abschirmung in einer Ebene im wesentlichen parallel zu der Lampenachse, während die Reflektoren 52 und 58 den Einfallswinkel auf die Prismenplatte in einer Ebene senkrecht zu der Lampe 56 begrenzen.

Anders als bei den vorangehenden Ausführungsformen beschränkt der Einkoppelreflektor 58 nicht die Direkteinstrahlung auf die Prismenplatte 54. Ein Teil des Lichts fällt daher direkt auf die Prismenplatte 54 ein. Für diesen Lichtanteil erzeugt der Reflektor 52 keine Abschirmung. Es hat sich jedoch gezeigt, daß auch mit dieser Anordnung befriedigende Ergebnisse erzielt werden können, insbesondere wenn eine Prismenstruktur gewählt wird, die eine Abschirmung nicht nur in der Ebene parallel zu der Lampenachse, sondern auch eine - im Regelfall schwächere - Abschirmung in der Ebene senkrecht zu der Lampenachse erzeugt.

Der Dachreflektor 52 ist mit einer Zackenstruktur mit sich periodisch wiederholenden Zacken 60 mit Seiten 60a und 60b versehen, wobei die Seiten 60a der Lampe 56 bzw. dem Reflektor 58 zugewandt sind und von diesen direkt einfallendes Licht nach unten zu der Prismenplatte 54 reflektieren, während die Seiten 60b von der Lampe 56 und dem Reflektor 58 abgewandt sind und nur Licht reflektieren, das von der Prismenplatte 54, den (nicht dargestellten) Seitenwänden bzw. von dem Abschlußreflektor 62 auf der der Lampe gegenüberliegenden Seite reflektiert wird. Die Seiten 60a und 60b sind jeweils gerade ausgebildet, können aber ggf. auch gekrümmt sein und ohne Kante ineinander übergehen. In Fig. 4 sind von einem Punkt der Lampe 56 ausgehende Strahlen durch gestrichelte Linien illustriert. Man erkennt, daß das Licht von diesem Punkt nur auf die Seiten 60a einfällt und der Einfallswinkel derart ist, daß das Licht nicht zu der gegenüberliegenden Seite 60b, sondern zu der Prismenplatte 54 reflektiert wird, wo es mit einem Einfallswinkel $\gamma \leq \gamma_{max}$ einfällt. Licht, das von dem Dachreflektor 52 nicht mehr reflektiert wird, trifft auf den Abschlußreflektor 62, der seinerseits so abgeschrägt angeordnet ist, daß er das direkt auf ihn einfallende Licht der Lampe 56 so zu der Prismenplatte 54 reflektiert, daß dieses mit einem Winkel $\gamma \leq \gamma_{max}$ auf die Prismenplatte 54 einfällt.

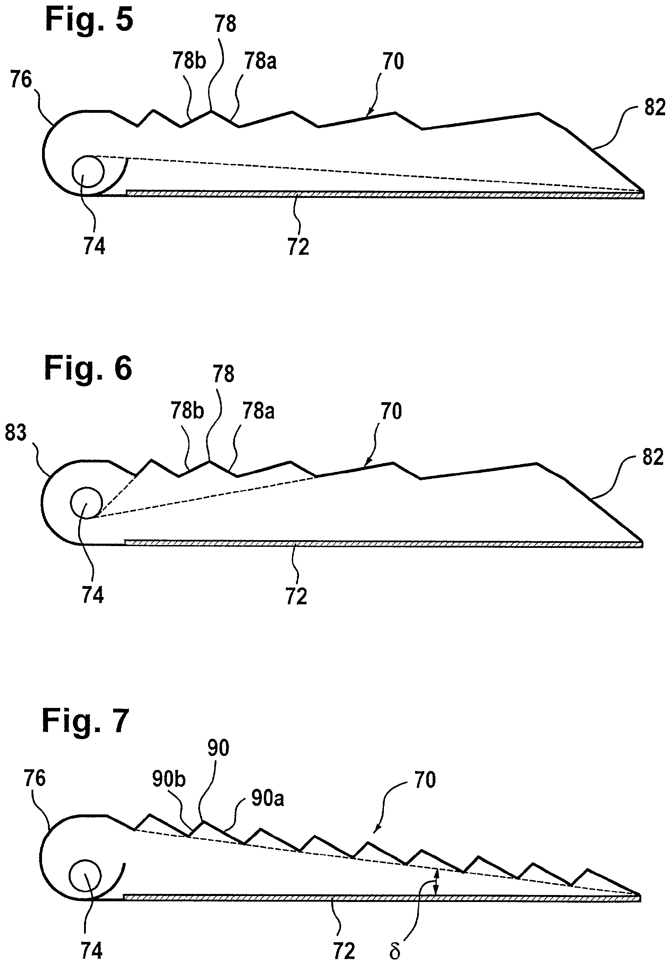

Fig. 5 zeigt eine weitere Ausführungsform einer erfindungsgemäßen Leuchte mit einem Dachreflektor 70, einer Prismenplatte 72, einer Lampe 74 sowie einem Einkoppelreflektor 76, die in der vorangehend beschriebenen Weise zusammenwirken. Wie bei dem Ausführungsbeispiel der Figuren 1 und 2 verhindert der Einkoppelreflektor 76 eine direkte Einstrahlung des Lichts der Lampe auf die Prismenplatte 72. Anders als bei dem Ausführungsbeispiel der Fig. 1 und 2 hat der Einkoppelreflektor hier in etwa die Form eines Dreiviertelkreises, in dem die Lampe 74 exzentrisch angeordnet ist.

Der Dachreflektor 70 ist wieder mit einer Zackenstruktur ausgebildet, wobei die Zacken 78 jeweils eine der Lichtquelle zugewandte Seite 78a und eine von der Lichtquelle abgewandte Seite 78b aufweisen. Wie aus Fig. 5 ersichtlich ist, nimmt die Länge der Abschnitte 78b in der Richtung von der Lampe 74 weg zu und ihre Neigung zu der Horizontalen nimmt ab. Auf diese Weise kann die Lichtstärkeverteilungskurve entsprechend der jeweiligen Beleuchtungsaufgabe gestaltet werden. Außerdem kann die Leuchtdichte über der Prismenplatte vergleichmäßigt werden. An den Dachreflektor 70 schließt sich wieder ein Abschlußreflektor 82 an, der direkt auf ihn von der Lampe 74 einfallendes Licht zu der Prismenplatte 72 reflektiert, wo es mit einem Einfallswinkel $\gamma \leq \gamma_{max}$ auftrifft. Die Neigung und die Länge der Seiten 78a kann sich ebenfalls ändern, um einen bestimmten Einfallswinkel des Lichts auf die Prismenplatte 72 zu erreichen. Auf die Einzelheiten dieser Zackenstruktur kommt es hier nur insoweit an, als die erfindungsgemäß vorgesehene Begrenzung des Einfallswinkels an der Prismenplatte 72 durch den Dachreflektor 70 bewirkt wird.

Fig. 6 zeigt eine ähnliche Ausführungsform wie Fig. 5, bei der gleiche Teile mit gleichen Bezugszeichen versehen sind. Bei dieser Ausführungsform verhindert der Einkoppelreflektor 83, ähnlich wie bei dem Ausführungsbeispiel der Fig. 4, nicht den direkten Lichteinfall auf die Prismenplatte 72.

Fig. 7 zeigt eine Ausführungsform einer erfindungsgemäßen Leuchte, die ähnlich wie das Ausführungsbeispiel gemäß Fig. 5 aufgebaut ist, bei der gleiche bzw. gleichwirkende Teile mit denselben Bezugszeichen wie in Fig. 5 bezeichnet sind. Bei dieser Ausführungsform ist der Dachreflektor 70 mit regelmäßigen Zacken 90 mit einer längeren, der Lampe 74 zugewandten Seite 90a und einer kürzeren, von der Lampe 74 abgewandten Seite 90b ausgebildet. Die Zackenstruktur des Dachreflektors 70 folgt insgesamt einer zur Horizontalen bzw. der Prismenplatte 72 in einem Winkel $\delta$ geneigten Linie, so daß sich insgesamt eine Keilform des Hohllichtleiters ergibt.

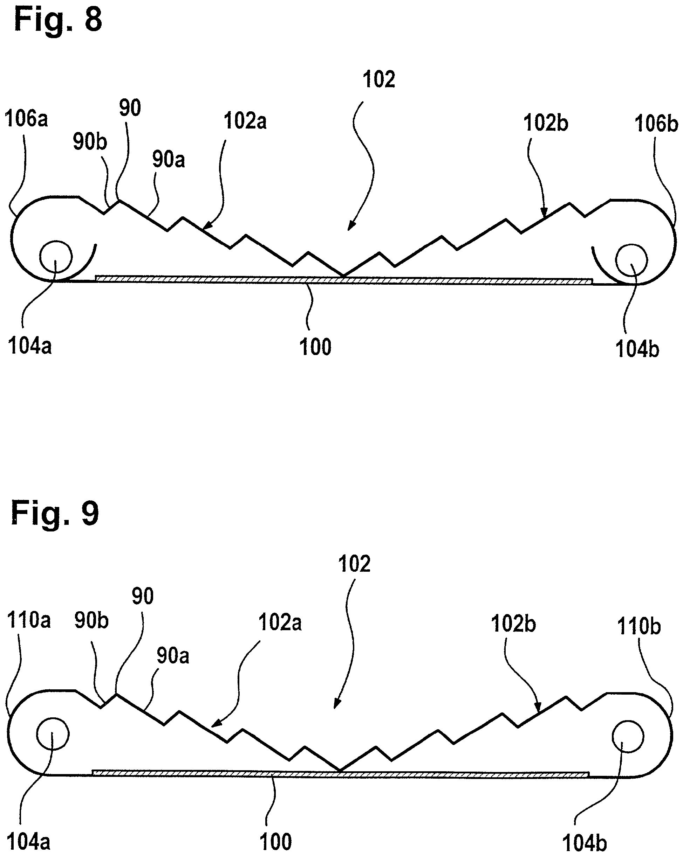

Fig. 8 zeigt eine zweilampige Ausführungsform der Leuchte gemäß Fig. 7 mit einer durchgehenden Prismenplatte 100, einem Dachreflektor 102 mit zwei Hälften 102a und 102b, welche zu der Prismenplatte 100 geneigt sind, derart, daß die Höhe des Hohllichtleiters von den beiden einander gegenüberliegenden Seiten zur Mitte hin abnimmt und der Dachreflektor 102 etwa in der Mitte des Hohllichtleiters die Prismenplatte 100 berührt. Die Reflektorhälften 102a und 102b sind mit Zacken 90 ausgebildet, wie sie vorangehend mit Bezug auf Fig. 7 beschrieben wurden. Auf zwei einander gegenüberliegenden Seiten des Hohllichtleiters sind Lampen 104a und 104b angeordnet, denen jeweils ein Einkoppelreflektor 106a bzw. 106b zugeordnet ist, der wie der Einkoppelreflektor 76 in Fig. 7 ausgebildet ist. Die Ausbildung und Wirkungsweise der Prismenplatte 100, des Einkoppelreflektors 106a bzw. 106b, der Lampe 104a sowie der Dachreflektorabschnitt 102a und 102b entspricht der Wirkungsweise der vorangehenden Ausführungsformen, insbesondere der Wirkungsweise der Elemente 70 bis 76 der Ausführungsform gemäß Fig. 7.

Fig. 9 ist bis auf die Ausbildung der Einkoppelreflektoren identisch mit derjenigen der Fig. 8. Gleiche Bauteile sind mit den gleichen Bezugszeichen bezeichnet. Die bei dieser Ausführungsform verwendeten Einkoppelreflektoren 110a und 110b sind auf der dem Hohllichtleiter zugewandten Seite offen und lassen eine direkte Einstrahlung des Lichts der Lampe auf die Prismenplatte 100 zu. Durch die Neigung der Reflektorabschnitte 102a und 102b und eine geeignete Wahl des Abstands des Punktes M, in dem der Dachreflektor 102 die Prismenplatte 100 berührt, von den Lampen 104a und 104b, kann effektiv eine Begrenzung des Einfallswinkels $\gamma$ für das Licht erreicht werden, das direkt von den Lampen 104a und 104b auf die Prismenplatte 100 einfällt.

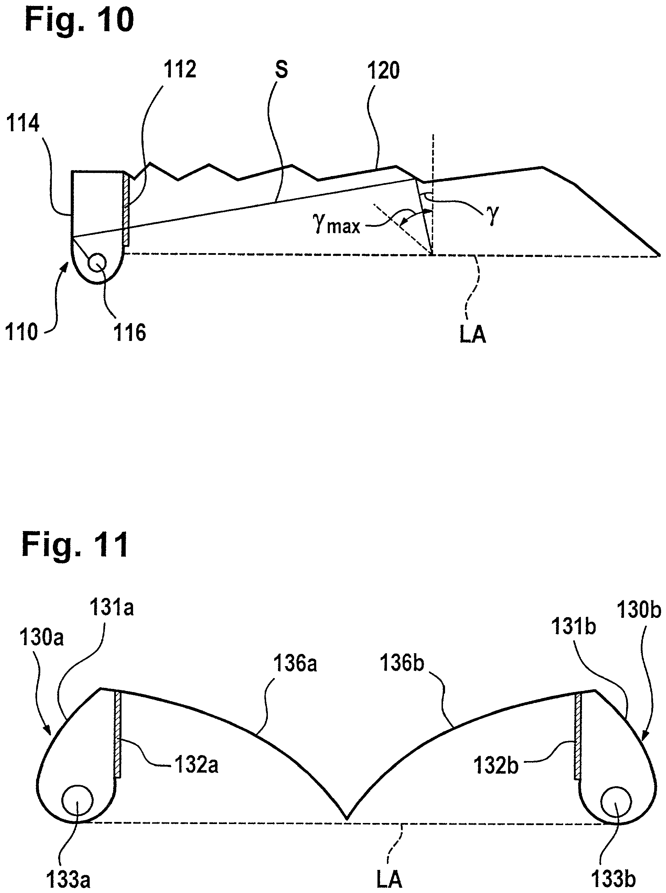

Fig. 10 zeigt schematisch eine Ausführungsform der Erfindung, bei welcher die Reflektoranordnung, welche eine zusätzliche Abschirmung erzeugt, der lichtbrechenden Struktur optisch nachgeschaltet ist, also außerhalb eines Hohllichtleiters liegt. Bei dieser Ausführungsform ist ein Hohllichtleiter 110 mit einer Prismenplatte 112 als Lichtauskoppelfläche und einem ebenen Dachreflektor 114 ausgebildet, in den von einer seitlichen angeordneten Lampe 116 Licht eingekoppelt wird. Die Prismenplatte ist wie in Fig. 2 dargestellt ausgebildet und so angeordnet, daß sie in der Richtung senkrecht zu der Achse der Lampe 116, also in einer Ebene senkrecht zu der Zeichenebene, eine Abschirmung erzeugt. An die Prismenplatte 112 schließt an der Außenseite des Hohllichtleiters ein Reflektor 120 an, der bei diesem Ausführungsbeispiel wie bei dem Ausführungsbeispiel gemäß Fig. 5 ausgebildet ist, aber auch in beliebiger anderer Weise ausgebildet sein kann, die eine Begrenzung des Abstrahlwinkels $\gamma$ an der Lichtaustrittsfläche auf Werte kleiner als einem Maximalwinkel $\gamma_{max}$ bewirkt, beispielsweise wie mit Bezug auf Fig 1, 3 und 4 und 6 bis 9 beschrieben und dargestellt. Die (imaginäre) Lichtaustrittsfläche ist durch die gestrichelte Linie LA dargestellt. Die Reflektoranordnung 120 bewirkt also, daß das nach unten abgestrahlte Licht in einer Ebene parallel zu der Zeichenebene einen Abstrahlwinkel $\gamma \leq \gamma_{max}$ zur Senkrechten besitzt, so daß, zusammen mit der abschirmenden Wirkung der Prismenplatte 112 in der Ebene senkrecht zu der Zeichenebene, eine Abschirmung in mehreren Ebenen bewirkt wird. Dies ist schematisch in Fig. 10 anhand des Strahls S dargestellt.

Das Ausführungsbeispiel der Fig. 10 kann in vielfacher Hinsicht abgewandelt werden. Der Reflektor 120 kann beispielsweise konkav gekrümmt sein. Der Einkoppelreflektor kann eine den Einfallswinkel auf die Prismenplatte begrenzende Form, ähnlich wie in Fig. 1, haben. Die Leuchte kann auch mit zwei Lampen, analog zu den Ausführungsbeispielen der Fig. 2, 8 und 9 ausgebildet sein. Eine solche Ausführungsform ist in Fig. 11 dargestellt. Bei dem Ausführungsbeispiel der Fig. 11 weisen die Hohllichtleiter 130a und 130b einen gekrümmten Dachreflektor 131a bzw. 131b auf, dessen Abstand von den Prismenplatten 132a und 132b in der Richtung von den Lampen 133a und 133b weg abnimmt. An die Prismenplatten 132a und 132b schließen nach unten gewölbte Reflektoren 136a und 136b an, welche den Reflektoren 35 und 37 des Ausführungsbeispiels gemäß Fig. 3 entsprechen. Es liegt auf der Hand, daß auch hier andere Reflektorformen, insbesondere die in Fig. 8 und 9 dargestellten Reflektorformen, verwendet werden können.

Die in der vorangehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein. Insbesondere können für die verschiedenen Ausführungsformen beschriebenen Reflektorformen, Prismenplatten und Reflektoranordnungen in beliebiger Weise kombiniert werden, solange die Reflektoren die erfindungsgemäß vorgesehene Begrenzung des Einfallswinkels an der lichtbrechenden Struktur bzw. des Ausfallswinkels an der Lichtaustrittsfläche bewirken.

Bezugszeichenliste

| | |
|---|---|
| 1 | Hohllichtleiter |
| 3 | Prismenplatte |
| 5 | Dachreflektor |
| 7 | glatte Seite der Prismenplatte |
| 9 | strukturierte Seite der Prismenplatte |
| 11 | Prisma |
| 13 | Lampe |
| 15 | Einkoppelreflektor |
| 17 | Kante des Einkoppelreflektors |
| 19 | stark gekrümmter Abschnitt des Einkoppelreflektors |
| 21 | flacher Abschnitt des Einkoppelreflektors |
| 31 | Hohllichtleiter |
| 33 | Hohllichtleiter |
| 35 | Dachreflektor |
| 37 | Dachreflektor |
| 39 | Prismenplatte |
| 41 | Lampe |
| 43 | Lampe |
| 45 | Einkoppelreflektor |
| 47 | Einkoppelreflektor |
| 50 | Hohllichtleiter |
| 52 | Dachreflektor |
| 54 | Prismenplatte |
| 56 | Lampe |
| 58 | Einkoppelreflektor |
| 60 | Zacke |
| 60a, 60b | Zackenseite |
| 62 | Abschlußreflektor |
| 70 | Dachreflektor |
| 72 | Prismenplatte |
| 74 | Lampe |
| 76 | Einkoppelreflektor |
| 78 | Zacke |
| 78a, 78b | Zackenseite |
| 82 | Abschlußreflektor |
| 83 | Einkoppelreflektor |
| 90 | Zacke |

| 90a, 90b | Zackenseite |
|---|---|
| 100 | Prismenplatte |
| 102 | Dachreflektor |
| 102a, 102b | Reflektorhälften |
| 104a, 104b | Lampe |
| 106a, 106b | Einkoppelreflektor |
| 110a, 110b | Einkoppelreflektor |
| 110 | Hohllichtleiter |
| 112 | Prismenplatte |
| 114 | Dachreflektor |
| 116 | Lampe |
| 120 | Reflektor |
| 130a, 130b | Hohllichtleiter |
| 131a, 131b | Dachreflektor |
| 132a, 132b | Prismenplatte |
| 133a, 133b | Lampe |
| 136a, 136b | Reflektor |
| L | Längsachse der Prismen |
| LA | Lichtaustrittsfläche |
| S | Lichtstrahl |
| w | Prismenwinkel |

**Patentansprüche**

1. Leuchte mit einer Lichtaustrittsfläche und einer Lichtquelle (13; 41, 43; 56; 74; 104a, 104b; 116; 133a, 133b), bei der in einem Strahlengang von der Lichtquelle (13; 41, 43; 56; 74; 104a, 104b; 116; 133a, 133b) zu der Lichtaustrittsfläche ein lichtdurchlässiges Element (3; 39; 54; 72; 100; 112; 132a, 132b) mit einer lichtbrechenden Struktur (11) an einer Grenzfläche zwischen zwei Medien mit unterschiedlichen Brechungsindizes sowie eine Reflektoranordnung (5, 15; 35, 37, 45, 47; 52, 58, 62; 70, 76; 102, 106a, 106b; 120; 136a, 136b) angeordnet sind, wobei die lichtbrechende Struktur (11) eine Abschirmung des über die Lichtaustrittsfläche abgestrahlten Lichts in mindestens einer Ebene senkrecht zu der Lichtaustrittsfläche erzeugt, wobei die reflektierende Fläche bzw. die reflektierenden Flächen der Reflektoranordnung (5, 15; 35, 37, 45, 47; 52, 58, 62; 70, 76; 102, 106a, 106b; 120; 136a, 136b) hinsichtlich ihrer Orientierung zu dem auf sie einfallenden Strahl (S) in dem besagten Strahlengang und der sich daraus ergebenden Reflexionswinkel so eingerichtet ist, daß der Winkelbereich, in dem das die Reflektoranordnung verlassende Licht in dem Strahlengang läuft, derart begrenzt ist, daß zumindest in einer Ebene senkrecht zu der Lichtaustrittsfläche eine Lichtabstrahlung oberhalb eines Grenzwinkels bezüglich einer Senkrechten zur Lichtaustrittsfläche im wesentlichen verhindert wird, so daß eine Abschirmung erzeugt wird, wobei die lichtbrechende Struktur (11) in dieser Ebene keine Abschirmung oder eine schwächere Abschirmung als die von der Reflektoranordnung (5, 15; 35, 37, 45, 47; 52, 58, 62; 70, 76; 102, 106a, 106b; 120; 136a, 136b) erzeugte Abschirmung erzeugt, **dadurch gekennzeichnet, dass** die Leuchte einen Hohllichtleiter (1; 31, 33; 50; 110; 130a, 130b) aufweist, in den von mindestens einer Lichteinkoppelseite aus Licht von einer Lichtquelle (13; 41, 43; 56; 74; 104a, 104b) eingekoppelt wird und aus dem an mindestens einer Lichtauskoppelseite Licht über das Element mit der lichtbrechenden Struktur (11) ausgekoppelt wird, so daß das ausgekoppelte Licht an der Lichtaustrittsfläche der Leuchte abgestrahlt wird und eine Reflektoranordnung (5, 15; 35, 37, 45, 47; 52, 58, 62; 70, 76; 102, 106a, 106b; 120; 136a, 136b), welche Licht von der Lichtquelle zu der lichtbrechenden Struktur (11) lenkt, in einer Fläche senkrecht zu der Lichtauskoppelseite des Hohllichtleiters den Einfallswinkel ($\gamma$) auf die lichtbrechende Struktur im wesentlichen auf Werte unterhalb eines Grenzwinkels ($\gamma_{max}$) bezüglich einer Senkrechten zu der lichtbrechenden Struktur begrenzt.

2. Leuchte, insbesondere nach Anspruch 1, mit einer Lichtaustrittsfläche und einer Lichtquelle (13; 41, 43; 56; 74; 104a, 104b; 116; 133a, 133b), bei der in einem Strahlengang von der Lichtquelle (13; 41, 43; 56; 74; 104a, 104b; 116; 133a, 133b) zu der Lichtaustrittsfläche ein lichtdurchlässiges Element (3; 39; 54; 72; 100; 112; 132a, 132b) mit einer lichtbrechenden Struktur (11) an einer Grenzfläche zwischen zwei Medien mit unterschiedlichen Brechungsindizes sowie eine Reflektoranordnung (5, 15; 35, 37, 45, 47; 52, 58, 62; 70, 76; 102, 106a, 106b; 120; 136a, 136b) angeordnet sind, wobei die lichtbrechende Struktur (11) eine Abschirmung des über die Lichtaustrittsfläche abgestrahlten Lichts in mindestens einer Ebene senkrecht zu der Lichtaustrittsfläche erzeugt, wobei die reflektierende Fläche bzw. die reflektierenden Flächen der Reflektoranordnung (5, 15; 35, 37, 45, 47; 52, 58, 62; 70, 76; 102, 106a, 106b; 120; 136a, 136b) hinsichtlich ihrer Orientierung zu dem auf sie einfallenden Strahl (S) in dem besagten Strahlengang und der sich daraus ergebenden Reflexionswinkel so eingerichtet ist, daß der Winkelbereich, in dem das die Reflektoranordnung verlassende Licht in dem Strahlengang läuft, derart begrenzt ist, daß zumindest in einer Ebene senkrecht zu der Lichtaustrittsfläche eine Lichtabstrahlung oberhalb eines Grenzwinkels bezüglich einer Senkrechten zur Lichtaustrittsfläche im wesentlichen verhindert wird, so daß eine Abschirmung erzeugt wird, wobei die lichtbrechende Struktur (11) in dieser Ebene keine Abschirmung oder eine schwächere Abschirmung als die von der Reflektoranordnung (5, 15; 35, 37, 45, 47; 52, 58, 62; 70, 76; 102, 106a, 106b; 120; 136a, 136b) erzeugte Abschirmung erzeugt, **dadurch gekennzeichnet, dass** eine Reflektoranordnung (120; 136a, 136b) der lichtbrechenden Struktur (112; 132a, 132b) nachgeschaltet ist und so ausgebildet ist, daß in einer Ebene senkrecht zu der Lichtaustrittsfläche der Einfallswinkel ($\gamma$) bezüglich einer Senkrechten zu der Lichtaustrittsfläche im wesentlichen auf Werte unterhalb eines Grenzwinkels ($\gamma_{max}$) beschränkt ist.

3. Leuchte nach einem der Ansprüche 1 oder 2, **dadurch gekennzeichnet, daß** die lichtbrechende Struktur (11) eine Abschirmung in mehreren Ebenen erzeugt und die Reflektoranordnung (5, 15; 35, 37, 45, 47; 52, 58, 62; 70, 76; 102, 106a, 106b; 120; 136a, 136b) die Abschirmung in einer Ebene verstärkt, in welcher die lichtbrechende Struktur (11) keine Abschirmung oder eine geringere Abschirmung als in einer anderen Ebene erzeugt.

4. Leuchte nach einem der Ansprüche 1 bis 3, **dadurch gekennzeichnet, daß** die lichtbrechende Struktur durch ein oder mehrere längliche lichtbrechende Elemente (11) gebildet wird, die entsprechend einem flächenfüllenden Muster aus einer oder mehreren kreuzungsfreien Linien dieses Musters angeordnet sind, wobei die lichtbrechenden Elemente zumindest in einer Fläche senkrecht zu den Linien eine Abschirmung des aus der lichtbrechenden Struktur austretenden Lichts erzeugen und in der Richtung parallel zu den Linien keine oder nur eine geringere Abschirmung des aus der lichtbrechenden Struktur austretenden Lichts erzeugen, und daß die Fläche, in welcher die Reflektoranordnung eine Abschirmung erzeugt, zumindest abschnittsweise im wesentlichen parallel zu der oder den Linien liegt.

5. Leuchte nach einem der Ansprüche 1 bis 4, **dadurch gekennzeichnet, daß** die Reflektoranordnung einen fokussierenden oder defokussierenden Reflektor oder Reflektorabschnitt aufweist.

6. Leuchte nach einem der Ansprüche 1 bis 4, **gekennzeichnet durch** eine Strahlbegrenzungseinrichtung (15, 17; 45, 47; 76; 106a, 106b), welche bewirkt, daß das Licht der Lichtquelle im wesentlichen nur über eine Reflexion an einem Reflektor oder einem Reflektorabschnitt der Reflektoranordnung (5; 35, 37; 70; 102) von der Lichtquelle zu der lichtbrechenden Struktur geleitet wird.

7. Leuchte nach einem der Ansprüche 1 bis 6, **dadurch gekennzeichnet, daß** die Reflektoranordnung einen ersten Reflektor oder Reflektorabschnitt (15; 45, 47; 76; 106a; 106b) umfaßt, welcher die Lichtquelle zumindest teilweise umgibt und das auf ihn einfallende Licht der Lichtquelle zumindest teilweise zu einem zweiten Reflektor oder Reflektorabschnitt (5; 35, 37; 70; 102) lenkt, welcher das auf ihn von der Lichtquelle direkt einfallende Licht sowie das zu ihm von dem ersten Reflektor oder Reflektorabschnitt reflektierte Licht zu der lichtbrechenden Struktur reflektiert.

8. Leuchte nach Anspruch 7, **dadurch gekennzeichnet, daß** der erste Reflektor (15; 45, 47; 76; 106a, 106b) einen direkten Lichteinfall von der Lichtquelle auf die lichtbrechende Struktur (11) verhindert.

9. Leuchte nach einem der Ansprüche 1 bis 8, **dadurch gekennzeichnet, daß** die Reflektoranordnung einen Reflektor oder Reflektorabschnitt (50; 70; 102) umfaßt, der aus einer Struktur von Reflektorelementen (60; 78; 90) aufgebaut ist, die jeweils einen Flächenabschnitt (60a; 78a; 90a) aufweisen, der Licht in dem Strahlengang von der Lichtquelle zu der Lichtaustrittsfläche über die Reflektoranordnung und die lichtbrechende Struktur Licht reflektiert, und einen Flächenabschnitt (60b; 78b; 90b) aufweisen, der in diesem Strahlengang kein Licht reflektiert.

10. Leuchte nach Anspruch 9, **dadurch gekennzeichnet, daß** die Reflektorelemente entsprechend einer konkaven oder konvexen Einhüllenden angeordnet sind.

11. Leuchte nach Anspruch 9, **dadurch gekennzeichnet, daß** die Reflektorelemente (90) entlang einer zu der lichtbrechenden Struktur oder der Lichtaustrittsfläche geneigten Fläche angeordnet sind.

12. Leuchte nach einem der Ansprüche 9 bis 11, **dadurch gekennzeichnet, daß** die Reflektorelemente (60; 78; 90) zackenförmig oder gewölbt sind.

13. Leuchte nach Anspruch 12, **dadurch gekennzeichnet, daß** die Seiten der Zacken verschiedener Reflektorelemente (78) zumindest teilweise eine unterschiedliche Länge und/oder Neigung bezüglich der lichtbrechenden Struktur aufweisen.

**Claims**

1. Luminaire with a light outlet surface and a light source (13; 41, 43; 56; 74; 104a, 104b; 116; 133a, 133b), with which, arranged in the beam path from the light source (13; 41, 43; 56; 74; 104a, 104b; 116; 133a, 133b) to the light outlet surface, is a transparent element (3; 39; 54; 72; 100; 112; 132a, 132b) with a light refractive structure (11) on a contact surface between two media with different refraction indices and a reflector configuration (5, 15; 35, 37, 45,47; 52, 58, 62; 70, 76; 102, 106a, 106b; 120; 136a, 136b), wherein the light refractive structure (11) produces a screening of the light radiated by the light outlet surface in at least one plane perpendicular to the light outlet surface, wherein the reflective surface or the reflective surfaces of the reflector configuration (5, 15; 35, 37, 45,47; 52, 58, 62; 70, 76; 102, 106a, 106b; 120; 136a, 136b) is or are aligned in respect of its orientation to the beam (S) impinging on it in the said beam path and the reflection angle deriving from this is aligned in such a way that the angle range in which the light leaving the reflector configuration runs in the beam path is limited in such a way that, at least in one plane perpendicular to the light outlet surface, a light emission above a limit angle in relation to a perpendicular to the light outlet surface is essentially prevented, such that screening is produced, wherein the light refractive structure (11) in this plane does not produce any screening or a weaker screening than the screening produced by the reflector configuration (5, 15; 35, 37, 45,47; 52, 58, 62; 70, 76; 102, 106a, 106b; 120; 136a, 136b), **characterized in that** the luminaire comprises a hollow light conductor (1; 31, 33; 50; 110; 130a, 130b), into which, from at least one light coupling-in side, light from a light source (13; 41, 43; 56; 74; 104a, 104b) is coupled in, and from which, on at least one coupling-out side, light is coupled out via the element with the light refractive structure (11), such that the coupled-out light is radiated away at the light outlet surface of the luminaire, and a reflector configuration (5, 15; 35, 37, 45,47; 52, 58, 62; 70, 76; 102, 106a, 106b; 120; 136a, 136b), which deflects light from the light source to the light refractive structure (11), in a surface perpendicular to the light coupling-out side of the hollow light conductor, limits the incidence angle ($\gamma$) onto the light refractive structure essentially to values below a limit angle ($\gamma_{max}$) in relation to a perpendicular in the light refractive structure.

2. Luminaire, in particular according to claim 1, with a light outlet surface and a light source (13; 41, 43; 56; 74; 104a, 104b; 116; 133a, 133b), with which, arranged in a beam path from the light source (13; 41, 43; 56; 74; 104a, 104b; 116; 133a, 133b) to the light outlet surface, are a transparent element (3; 39; 54; 72; 100; 112; 132a, 132b) with a light refractive structure (11) at a contact surface between two media with different refraction indices and a reflector configuration (5, 15; 35, 37, 45,47; 52, 58, 62; 70, 76; 102, 106a, 106b; 120; 136a, 136b), wherein the light refractive structure (11) produces a screening of the light radiated by the light outlet surface in at least one plane perpendicular to the light outlet surface, wherein the reflective surface or reflective surfaces of the reflector configuration (5, 15; 35, 37, 45,47; 52, 58, 62; 70, 76; 102, 106a, 106b; 120; 136a, 136b) is or are aligned in respect of its orientation to the beam (S) impinging on it in the said beam path and the reflection angle deriving from this is aligned in such a way that the angle range in which the light leaving the reflector configuration runs in the beam path is limited in such a way that, at least in one plane perpendicular to the light outlet surface, a light emission above a limit angle in relation to a perpendicular to the light outlet surface is essentially prevented, such that screening is produced, wherein the light refractive structure (11) in this plane does not produce any screening or a weaker screening than the screening produced by the reflector configuration (5, 15; 35, 37, 45,47; 52, 58, 62; 70, 76; 102, 106a, 106b; 120; 136a, 136b), **characterized in that** a reflector configuration (120; 136a, 136b) is arranged downstream of the light refractive structure (112; 132a, 132b) and is configured in such a way that in a plane perpendicular to the light outlet surface the incidence angle ($\gamma$) in relation to a perpendicular to the light outlet surface is essentially restricted to value below a limit angle ($\gamma_{max}$).

3. Luminaire according to one of claims 1 or 2, **characterized in that** the light refractive structure (11) produces a screening in several planes and the reflector configuration (5, 15; 35, 37, 45,47; 52, 58, 62; 70, 76; 102, 106a, 106b; 120; 136a, 136b) intensifies the screening in a plane in which the light refractive structure (11) does not produce any screening, or less screening than in another plane.

4. Luminaire according to any one of claims 1 to 3, **characterized in that** the light refracting structure is formed by one or more longitudinal light refracting elements (11) which, in accordance with a surface-filling pattern, are arranged from one or more intersection-free lines of this pattern, wherein the light refracting elements, at least in one surface perpendicular to the lines, produce screening of the light emerging from the light refractive structure, and, in the direction parallel to the lines, does not produce any screening, or less screening, of the light emerging from the light refracting structure, and that the surface in which the reflector configuration produces screening lies at least in sections essentially parallel to the line(s).

5. Luminaire according to any one of claims 1 to 4, **characterized in that** the reflector configuration comprises a focusing or defocusing reflector or reflector section.

6. Luminaire according to any one of claims 1 to 4, **characterized by** a beam limiting device (15, 17; 45, 47; 76; 106a, 106b), which has the effect that the light from the light source is conducted essentially only via one reflection at a reflector or a reflector section of the reflector configuration (5; 35, 37; 70; 102) from the light source to the light refractive structure.

7. Luminaire according to any one of claims 1 to 6, **characterized in that** the reflector configuration comprises a first reflector or reflector section (15; 45, 47; 76; 106a; 106b), which at least partially surrounds the light source and deflects the light from the light source impinging onto it at least partially to a second reflector or reflector section (5; 35, 37; 70; 102), which reflects the light from the light source impinging directly onto it as well as the light reflecting to it from the first reflector or reflector section to the light refractive structure.

8. Luminaire according to claim 7, **characterized in that** the first reflector (15; 45, 47; 76; 106a, 106b) prevents a direct light impingement from the light source onto the light refractive structure (11).

9. Luminaire according to any one of claims 1 to 8, **characterized in that** the reflector configuration comprises a reflector or reflector section (50; 70; 102), which is built up from a structure of reflector elements (60; 78; 90), which in each case comprise a surface section (60a; 78a; 90a), which reflects light in the beam path from the light source to the light outlet surface via the reflector configuration and the light refractive structure, and a surface section (60b; 78b; 90b) which does not reflect any light in this beam path.

10. Luminaire according to claim 9, **characterized in that** the reflector elements are arranged in accordance with a concave or convex envelope.

11. Luminaire according to claim 9, **characterized in that** the reflector elements (90) are arranged along a surface inclined towards the light refractive structure or the light outlet surface.

12. Luminaire according to any one of claims 9 to 11, **characterized in that** the reflector elements (60; 78; 90) are arranged in a spike pattern or cambered.

13. Luminaire according to claim 12, **characterized in that** the sides of the spikes of different reflector elements (78) exhibit at least partially a different length and/or inclination in relation to the light refractive structure.

**Revendications**

1. Luminaire avec une surface de sortie de lumière et une source de lumière (13 ; 41, 43 ; 56 ; 74 ; 104a, 104b ; 116 ; 133a, 133b), dans lequel, dans un trajet optique de la source de lumière (13 ; 41, 43 ; 56 ; 74 ; 104a, 104b ; 116 ; 133a, 133b) vers la surface de sortie de lumière, sont disposés un élément transparent (3 ; 39 ; 54 ; 72 ; 100 ; 112 ; 132a, 132b) avec une structure réfringente (11) au niveau d'une interface entre deux milieux avec des indices de réfraction différents ainsi qu'un dispositif réflecteur (5, 15 ; 35, 37, 45, 47 ; 52, 58, 62 ; 70, 76 ; 102, 106a ; 120 ; 136a, 136b), la structure réfringente (11) formant une protection de la lumière émise par l'intermédiaire de la surface de sortie de lumière dans au moins un plan perpendiculaire à la surface de sortie de lumière, la surface réfléchissante ou les surfaces réfléchissantes du dispositif réflecteur (5, 15 ; 35, 37, 45, 47 ; 52, 58, 62 ; 70, 76 ; 102, 106a ; 120 ; 136a, 136b) étant conçues, en ce qui concerne leur orientation par rapport au rayon (S) incident dans ledit trajet optique et l'angle de réflexion qui en résulte, de façon à ce que le domaine angulaire dans lequel la lumière quittant le dispositif réflecteur s'étend dans le trajet optique, soit limité de façon à ce que, au moins dans un plan perpendiculaire à la surface de sortie de lumière, une émission de lumière soit globalement empêchée au-delà d'un angle limite par rapport à une perpendiculaire à la surface de sortie de lumière, ce qui permet d'obtenir une protection, la structure réfringente (11) ne produisant, dans ce plan aucune protection ou une protection plus faible que la protection générée par le dispositif réflecteur (5, 15 ; 35, 37, 45, 47 ; 52, 58, 62 ; 70, 76 ; 102, 106a ; 120 ; 136a, 136b), **caractérisé en ce que** le luminaire comprend un guide de lumière creux (1 ; 31, 33 ; 50 ; 110 ; 130a, 130b), dans laquelle une lumière provenant d'une source de lumière (13 ; 41, 43 ; 56 ; 74 ; 104a, 104b) est couplée par au moins un côté de couplage de lumière et hors de laquelle une lumière est découplée par l'élément avec la structure réfringente (11) au niveau d'au moins un côté de découplage de lumière, de façon à ce que la lumière découplée soit émise au niveau de la surface de sortie de lumière du luminaire et un dispositif réflecteur (5, 15 ; 35, 37, 45, 47 ; 52, 58, 62 ; 70, 76 ; 102, 106a ; 120 ; 136a, 136b), qui dévie la source de lumière vers la structure réfringente (11), limite, sur une surface perpendiculaire au côté de découplage de lumière du guide de lumière creux, l'angle d'incidence ($\gamma$) sur la structure réfringente globalement à des valeurs en dessous d'un angle limite ($\gamma_{max}$) par rapport à une perpendiculaire à la structure réfringente.

2. Luminaire, plus particulièrement selon la revendication 1, avec une surface de sortie de lumière et une source de lumière (13 ; 41, 43 ; 56 ; 74 ; 104a, 104b ; 116 ; 133a, 133b), dans lequel, dans un trajet optique de la source de lumière (13 ; 41, 43 ; 56 ; 74 ; 104a, 104b ; 116 ; 133a, 133b) vers la surface de sortie de lumière, sont disposés un élément transparent (3 ; 39 ; 54 ; 72 ; 100 ; 112 ; 132a, 132b) avec une structure réfringente (11) au niveau d'une interface entre deux milieux avec des indices de réfraction différents ainsi qu'un dispositif réflecteur (5, 15 ; 35, 37, 45, 47 ; 52, 58, 62; 70, 76; 102, 106a; 120; 136a, 136b), la structure réfringente (11) formant une protection de la lumière émise par l'intermédiaire de la surface de sortie de lumière dans au moins un plan perpendiculaire à la surface de sortie de lumière, la surface réfléchissante ou les surfaces réfléchissantes du dispositif réflecteur (5, 15 ; 35, 37, 45, 47 ; 52, 58, 62 ; 70, 76 ; 102, 106a ; 120 ; 136a, 136b) étant conçues, en ce qui concerne leur orientation par rapport au rayon (S) incident dans ledit trajet optique et l'angle de réflexion qui en résulte, de façon à ce que le domaine angulaire dans lequel la lumière quittant le dispositif réflecteur s'étend dans le trajet optique, est limité de façon à ce que, au moins dans un plan perpendiculaire à la surface de sortie de lumière, une émission de lumière soit globalement empêchée au-delà d'un angle limite par rapport à une perpendiculaire à la surface de sortie de lumière, ce qui permet d'obtenir une protection, la structure réfringente (11) ne produisant, dans ce plan aucune protection ou une protection plus faible que la protection générée par le dispositif réflecteur (5, 15 ; 35, 37, 45, 47 ; 52, 58, 62 ; 70, 76 ; 102, 106a ; 120 ; 136a, 136b),
**caractérisé en ce que**
un dispositif réflecteur (120 ; 136a, 136b) est disposé en aval de la structure réfringente (112; 132a, 132b) et est conçu de façon à ce que, dans un plan perpendiculaire à la surface de sortie de lumière, l'angle d'incidence ($\gamma$) par rapport à une perpendiculaire à la surface de sortie de lumière soit globalement limité à des valeurs inférieures à un angle limite ($\gamma_{max}$).

3. Luminaire selon l'une des revendications 1 ou 2, **caractérisé en ce que** la structure réfringente (11) génère une protection dans plusieurs plans et le dispositif réflecteur (5, 15 ; 35, 37, 45, 47 ; 52, 58, 62 ; 70, 76 ; 102, 106a ; 120 ; 136a, 136b) renforce la protection dans un plan dans lequel la structure réfringente (11) ne génère aucune protection ou génère une protection plus faible que dans un autre plan.

4. Luminaire selon l'une des revendications 1 à 3, **caractérisé en ce que** la structure réfringente (11) est constituée de plusieurs éléments réfringents allongés (11), qui sont disposés selon un motif remplissant la surface ou de plusieurs lignes sans intersection de ce motif, les éléments réfringents générant, au moins sur une surface perpendiculaire aux lignes, une protection de la lumière sortant de la structure réfringente et, dans la direction parallèle aux lignes, aucune protection ou seulement une faible protection de la lumière sortant de la structure réfringente, et **en ce que** la surface sur laquelle le dispositif réflecteur génère une protection est au moins partiellement globalement parallèle à la ligne ou aux lignes.

5. Luminaire selon l'une des revendications 1 à 4, **caractérisé en ce que** le dispositif réflecteur comprend un réflecteur focalisant ou défocalisant ou une portion de réflecteur.

6. Luminaire selon l'une des revendications 1 à 4, **caractérisé par** un dispositif de limitation optique (15, 17 ; 45, 47 ; 76 ; 106a, 106b) qui fait en sorte que la lumière de la source de lumière soit guidée globalement uniquement par une réflexion au niveau d'un réflecteur ou d'une portion de réflecteur du dispositif réflecteur (5 ; 35, 37 ; 70 ; 102) de la source de lumière vers la structure réfringente.

7. Luminaire selon l'une des revendications 1 à 6, **caractérisé en ce que** le dispositif réflecteur comprend un premier réflecteur ou portion de réflecteur (15 ; 45, 47 ; 76 ; 106a ; 106b) qui entoure au moins partiellement la source de lumière et dévie la lumière incidente de la source de lumière au moins partiellement vers un deuxième réflecteur ou portion de réflecteur (5 ; 35 ; 37 ; 70 ; 102) qui réfléchit la lumière provenant directement de la source de lumière ainsi que la lumière réfléchie vers lui par le premier réflecteur ou la portion de réflecteur vers la structure réfringente.

**8.** Luminaire selon la revendication 7, **caractérisé en ce que** le premier réflecteur (15 ; 45, 47 ; 76 ; 106a, 106b) empêche une incidence de lumière directe de la source de lumière sur la structure réfringente (11).

**9.** Luminaire selon l'une des revendications 1 à 8, **caractérisé en ce que** le dispositif réflecteur comme un réflecteur ou une portion de réflecteur (50 ; 70 ; 102) qui est constitué d'une structure d'éléments réflecteurs (60 ; 78 ; 90) qui présentent chacun une portion de surface (60a ; 78a ; 90a) qui réfléchit la lumière provenant de la source de lumière vers la surface de sortie de lumière par l'intermédiaire du dispositif réflecteur et de la structure réfringente et une portion de surface (60a ; 78b ; 90b) qui ne réfléchit pas la lumière dans ce trajet optique.

**10.** Luminaire selon la revendication 9, **caractérisé en ce que** les éléments réflecteurs sont disposés selon une enveloppe concave ou convexe.

**11.** Luminaire selon la revendication 9, **caractérisé en ce que** les éléments réflecteurs (90) sont disposés le long d'une surface inclinée par rapport à la structure réfringente ou à la surface de sortie de lumière.

**12.** Luminaire selon l'une des revendications 9 à 11, **caractérisé en ce que** les éléments réflecteurs (60 ; 78 ; 90) sont dentés ou voûtés.

**13.** Luminaire selon la revendication 12, **caractérisé en ce que** les côtés des dents de différents éléments réflecteurs (78) présentent au moins partiellement des longueurs et/ou des inclinaisons différentes par rapport à la structure réfringente.

## Fig. 1

## Fig. 3

## Fig. 4

# Fig. 2

## Fig. 5

## Fig. 6

## Fig. 7

# Fig. 8

# Fig. 9

## Fig. 10

## Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 99310141 A
- EP 0846915 A1
- WO 9512782 A
- WO 9623166 A
- EP 0293182 A2
- US 3123308 A